# EUROPEAN PATENT APPLICATION

(11) **EP 1 768 405 A1**
(43) Date of publication of application: **28.03.2007**
(21) Application number: 05743785.7
(22) Date of filing: 26.05.2005
(51) Int. Cl.: H04N 7/083, H04N 7/087, H04N 7/088, H04N 7/24

(54) **DIGITAL IMAGE INPUT DEVICE AND METHOD THEREOF**

(30) Priority: 28.05.2004 JP 2004158838
(71) Applicant: MATSUSHITA ELECTRIC INDUSTRIAL CO., LTD., Osaka 571-8501 (JP)
(72) Inventor: HOASHI, Katsumi c/o Matsushita Elec. Ind. Co., Ltd, Chuo-ku, Osaka-shi, Osaka 540-6319 (JP); YAMAGUCHI, Ryoji c/o Matsushita El. Ind. Co., Ltd., Chuo-ku, Osaka-shi, Osaka 540-6319 (JP)
(74) Representative: Grünecker, Kinkeldey, Stockmair & Schwanhäusser Anwaltssozietät
(86) International application number: PCT/JP2005/009654
(87) International publication number: WO 2005/117434

(57) **Abstract**

The present invention provides a digital image receiving device and a digital image receiving method, wherein VBI (Vertical Blanking Interval) data can also be used as valid data. The digital image receiving device includes: an image capturing section for capturing digital image data, including image data and VBI data, and outputting the captured data; a storage section for storing the captured data; an image output section for reading out data stored in the storage section and outputting the read-out data; and a control section for controlling the image capturing section so that when the capturing process is performed, not only the image data but also the VBI data are captured and output to, and stored in, the storage section.

## Description

### TECHNICAL FIELD

The present invention relates to a digital image receiving device for capturing digital image data and outputting the captured digital image data and, more particularly, to the handling of VBI (Vertical Blanking Interval) data contained in the received digital image data.

### BACKGROUND ART

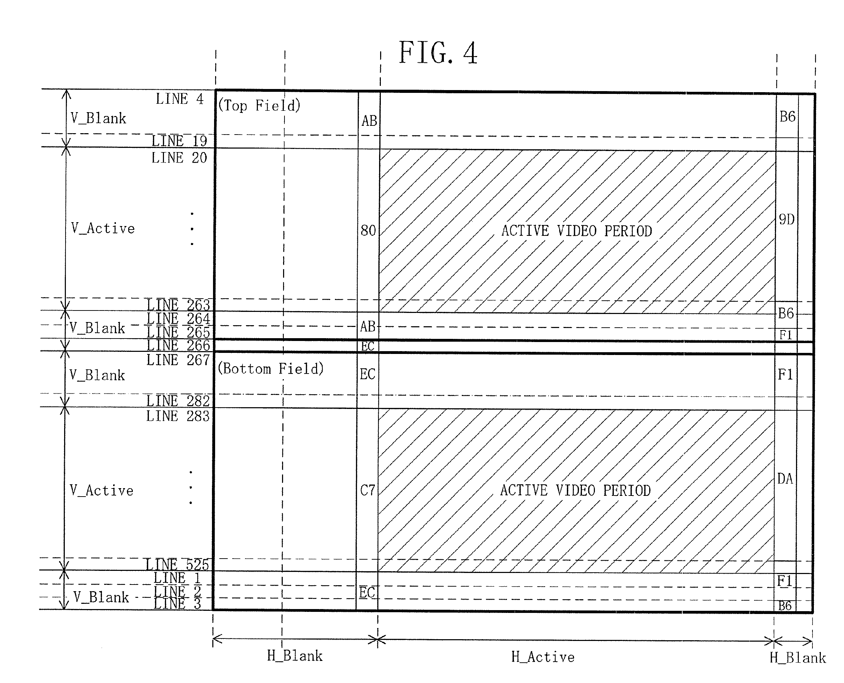

Devices for capturing image data, which is obtained by digitalizing a video, or the like, and for outputting captured image data are known in the art. A device of this type captures, and stores in a storage section, only a portion of the input digital image data that is actually displayed (e.g., what is called "active data" in the ITU-R656 standard (data of the "ACTIVE VIDEO PERIOD" in FIG. **4**)), and outputs the captured image. Related techniques are also known in the art, such as Patent Document 1 below.
Patent Document 1: Japanese Laid-Open Patent Publication No. 2001-8162

### DISCLOSURE OF THE INVENTION

### Problems To Be Solved By The Invention

It normally causes no problems to capture only image data to be actually displayed, as described above. However, in a case where the input digital image data contains VBI data, such as subtitles data or digital image copy control signal, such VBI data will not be captured, thereby failing to output text data or copy protection information, which is supposed to be output together with the image data actually displayed. This poses a serious issue in light of contents protection. An external LSI (Large-Scale Integration), or the like, may be used for processing the VBI data so as to solve such a problem. This, however, leads to an increase in the hardware cost.

An object of the present invention is to provide a digital image receiving device and a digital image receiving method, wherein when capturing digital image data, not only the image data to be actually displayed but also the VBI data can be used as valid data.

### Means For Solving The Problems

The present invention provides a digital image receiving device, including: an image capturing section for capturing digital image data, including image data and VBI (Vertical Blanking Interval) data, and outputting the captured data; a storage section for storing the captured data; an image output section for reading out data stored in the storage section and outputting the read-out data; and a control section for controlling the image capturing section so that when the capturing process is performed, not only the image data but also the VBI data are captured and output to, and stored in, the storage section.

Thus, since VBI data contained in the input digital image data can be obtained, it is possible to output, simultaneously with the image data to be actually displayed, information that has been transmitted as VBI data (e.g., text data or copy protection information).

It is preferred that the digital image receiving device further includes an image decoding section for decoding compressed encoded image data and outputting a result thereof, wherein: the storage section further stores image data obtained by the decoding process by the image decoding section; and the image output section reads out at least one of the decoded image data and the captured data from the storage section, and outputs the read-out data.

Thus, VBI data can be obtained and output in a case where the digital image data is captured while decoding encoded image data.

It is preferred in the digital image receiving device that the control section performs a control so that when the image data is output, the VBI data stored in the storage section is output while being superimposed on the image data in a vertical blanking interval.

It is preferred in the digital image receiving device that the control section performs a control so that text data obtained by analyzing the VBI data stored in the storage section is developed into an image representing the text to thereby obtain OSD (On Screen Display) data, which is stored in the storage section, and when the image data is output, the OSD data is output while being superimposed on the image data.

It is preferred in the digital image receiving device that the control section controls the image capturing section so that when capturing the VBI data, the image capturing section captures data superimposed on luminance data and does not capture data superimposed on chrominance data.

Another digital image receiving device of the present invention includes: an image capturing section for capturing digital image data including image data and VBI data, and outputting the captured data; an image decoding section for decoding compressed encoded image data and outputting a result thereof; a storage section for storing the captured data and image data obtained by a decoding process by the image decoding section; an image output section for reading out at least one of the decoded image data and the captured data from the storage section, and outputting the read-out data; and a control section for controlling the image capturing section so that when performing the capturing process, the VBI data is captured and output to, and stored in, the storage section while not capturing the image data.

Thus, it is possible to obtain and output VBI data contained in the digital image data while decoding the encoded image data.

A digital image receiving method of the present invention includes: an image capturing step of capturing digital image data including image data and VBI data; an image decoding step of decoding compressed encoded image data; a storing step of storing data captured in the image capturing step and image data obtained by the decoding process in the image decoding step; and an image outputting step of outputting at least one of the decoded image data and the captured data, wherein the image capturing step is performed so that when the capturing process is performed, not only the image data but also the VBI data are captured and can be stored in the storing step.

### Effects Of The Invention

According to the present invention, when capturing the digital image data, it is possible to obtain VBI data contained therein without missing the VBI data. Since subtitles data, a digital image copy control signal, etc., transmitted as VBI data can be output while being added to the captured image data, etc., it is possible to reproduce an image, or the like, as originally intended by the contents creator.

### BRIEF DESCRIPTION OF THE DRAWINGS

[FIG. **1**] FIG. **1** is a block diagram showing a digital image receiving device according to a first embodiment of the present invention.
[FIG. **2**] FIG. **2(a)** is a diagram showing a typical data structure of image data encoded in MPEG format. FIG. **2(b)** is a diagram showing the frames shown in FIG. **2(a)** in the order they are transmitted.
[FIG. **3**] FIG. **3** is a timing diagram showing how encoded image data input to an image decoding section of FIG. 1 is decoded.
[FIG. **4**] FIG. **4** is a diagram showing digital image data of the ITU-R656 standard.
[FIG. **5**] FIG. **5** is a block diagram showing an exemplary configuration of an image capturing section of FIG. **1.**
[FIG. **6**] FIG. **6** is a flow chart showing a control flow of an image capturing control section of FIG. **5.**
[FIG. **7**] FIG. **7(a)** is a conceptual diagram showing the range of data to be transmitted in a case where VBI data is transmitted together with other data. FIG. **7(b)** is a conceptual diagram showing the range of data to be transmitted in a case where VBI data is transmitted separately from other data.
[FIG. **8**] FIG. **8** is a diagram showing a data format of the ITU-R656 standard.
[FIG. **9**] FIG. **9** is a timing diagram showing digital image data input to the image capturing section of FIG. **1**.
[FIG. **10**] FIG. **10** is a timing diagram showing how encoded image data is decoded and the process of capturing digital image data.
[FIG. **11**] FIG. **11** is a flow chart showing a control flow of an image capturing control section according to a second embodiment.
[FIG. **12**] FIG. **12** is a conceptual diagram showing data to be transmitted in the second embodiment.
[FIG. **13**] FIG. **13** is a timing diagram showing how encoded image data is decoded and the process of capturing digital image data in the second embodiment.
[FIG. **14**] FIG. **14** is a flow chart showing a process to be performed on VBI data transmitted to a storage section of FIG. **1.**
[FIG. **15**] FIG. **15** is a flow chart showing a process to be performed when the result of analyzing the VBI data is superimposed on the output signal.

### DESCRIPTION OF REFERENCE NUMERALS

- 12: Image decoding section
- 14: Image capturing section
- 16: Storage section
- 18: Image output section
- 22: Control section
- 32: Start code detection section
- 34: Internal storage section
- 36: Image capturing control section

### BEST MODE FOR CARRYING OUT THE INVENTION

Embodiments of the present invention will now be described with reference to the drawings.

### FIRST EMBODIMENT

**A** first embodiment of the present invention is directed to a case where a digital image receiving device is used to capture digital image data while decoding encoded image data.

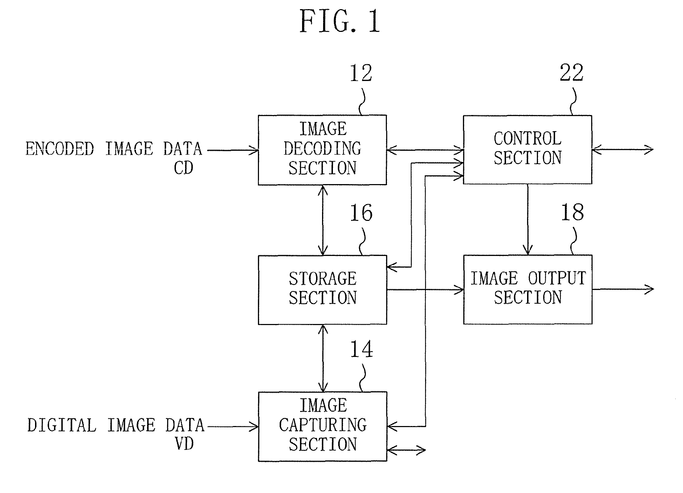

FIG. **1** is a block diagram showing a digital image receiving device according to the first embodiment of the present invention. The digital image receiving device of FIG. **1** includes an image decoding section **12,** an image capturing section **14,** a storage section **16,** an image output section **18,** and a control section **22.**

The image decoding section **12** decodes input encoded image data **CD,** and outputs the obtained result to the storage section **16.** The encoded image data **CD** is data obtained by compressing an image, e.g., data obtained by encoding an image according to the MPEG (Moving Picture Experts Group) standard.

Digital image data **VD** is input to the image capturing section **14.** The image capturing section **14** captures the digital image data **VD,** and outputs the captured data to the storage section **16.** The digital image data **VD** is image data according to the ITU-R656 standard, for example.

The storage section **16** stores data output from the image decoding section **12** and the image capturing section **14,** and outputs data to the image output section **18** according to an instruction from the control section **22.** According to an instruction from the control section **22,** the image output section **18** reads out, from the storage section **16,** at least one of the decoded image data and the captured data, and outputs the read-out data.

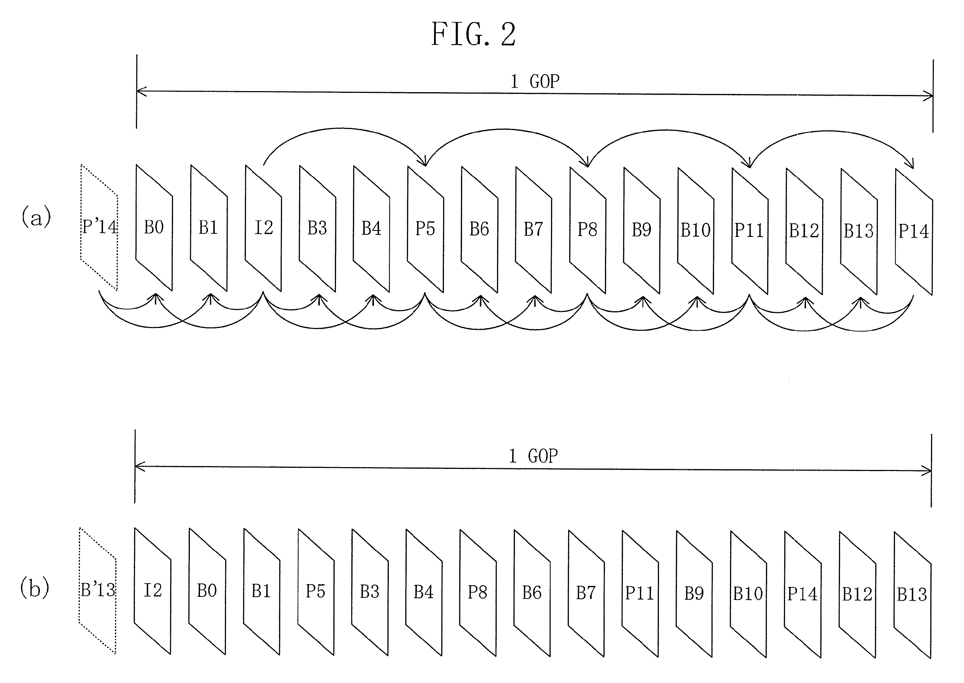

FIG. **2(a)** is a diagram showing a typical data structure of image data encoded in MPEG format. FIG. **2(b)** is a diagram showing the frames shown in FIG. **2(a)** in the order they are transmitted. In FIG. **2,** a GOP (Group Of Pictures), being the unit of encoding and obtained by dividing each sequence of a video, has 15 frames. One of the 15 frames is an I picture, 4 are P pictures, and 10 are B pictures. Herein, an I picture is an intra-frame coded image, a P picture is an inter-frame forward predictive coded image, and a B picture is an inter-frame bi-directional predictive coded image.

Specifically, referring to FIG. **2(a),** each frame at the head of an arrow is encoded with reference to the frame at the tail of that arrow. Thus, frame 12 is encoded by intra-frame encoding based only on this frame. Frame P5 is encoded by inter-frame predictive encoding with reference to frame 12, and frame P8 is encoded by inter-frame predictive encoding with reference to frame P5. Frames B0 and B1 are each encoded by inter-frame predictive encoding with reference to frames P'14 and 12, and frames B3 and B4 are each encoded by inter-frame predictive encoding with reference to frames I2 and P5 (frame P'14 is a frame of the preceding GOP). In practice, the image data are encoded and transmitted in the order as shown in FIG. **2(b).** This is done so that frames that will be required for decoding other frames can be decoded first before those other frames to be decoded.

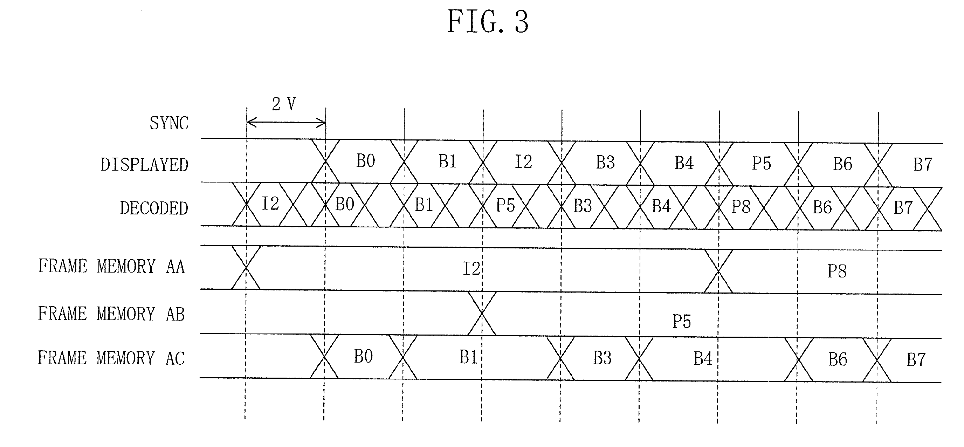

FIG. **3** is a timing diagram showing how encoded image data input to the image decoding section **12** of FIG. **1** is decoded. A case where a stream of the GOP structure as shown in FIG. **2** is reproduced will be described. FIG. **3** shows the vertical synchronization signal (Sync) of the picture for every frame. The interval of these vertical synchronization signals is 2V (V is the interval of the synchronization signal for every field). It is assumed that the storage section **16** includes frame memories AA, AB, AC, BA, BB and BC as areas for storing decoding results therein.

The image decoding section **12** decodes frame 12, being the leading frame of the input encoded image data, and stores the result in the frame memory AA. Then, the image decoding section **12** decodes frame B0, and stores the decoding result in the frame memory AC. Simultaneously with this, the control section **22** can output the decoding result of frame B0 from the image output section **18.** Then, the display (not shown) receiving the decoding result can display frame B0.

Thereafter, the image decoding section **12** performs similar decoding operations. If the current frame is an I picture or a P picture, the image decoding section **12** writes the decoding result in one of the frame memories AA and AB that is storing an older picture. Thus, the control section **22** can output, from the image output section **18,** an I picture or a P picture that is decoded immediately before the current frame. If the current frame is a B picture, the image decoding section **12** writes the decoding result in the frame memory AC. Thus, the control section **22** can output, from the image output section **18,** the frame that is currently being decoded.

FIG. **4** is a diagram showing digital image data of the ITU-R656 standard. In FIG. **4,** data points included in each line are transmitted in the left-to-right order, and the lines are transmitted in the top-to-bottom order.

In the ITU-R656 standard, regarding the horizontal direction, each line contains data arranged in this order: data of the blank period H_Blank, data of the active period H_Active, and data of the blank period H_Blank. Identifiers "start code SAV" and "end code EAV" are inserted each at the boundary between the active period H_Active and the blank period H_Blank, i.e., each as data in the blank period H_Blank adjacent to the data of the active period H_Active.

Regarding the vertical direction, lines are arranged in this order: lines of the blank period V_Blank, lines of the active period V_Active (hereinafter referred to as "active lines"), and lines of the blank period V_Blank. No identifier is inserted at the boundary between the active period V_Active and the blank period V_Blank. The period that is in the active period V_Active and in the active period H_Active is herein referred to as the "active video period". Data of the active video period is image data to be actually displayed, and will be referred to as "active data".

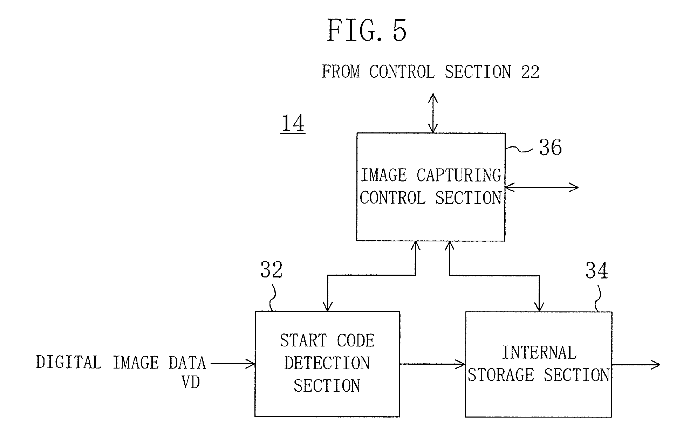

FIG. **5** is a block diagram showing an exemplary configuration of the image capturing section **14** of FIG. **1.** The image capturing section **14** includes a start code detection section **32,** an internal storage section **34,** and an image capturing control section **36.**

The start code detection section **32** detects a start code in the input digital image data. Where digital image data in conformity to the ITU-R656 standard is input, the start code detection section **32** detects the start code SAV and the end code EAV, for example, so as to capture data of the active period H_Active between the start code SAV and the end code EAV and transfer the captured data to the internal storage section **34,** while outputting the line number of the current line and the information of the current field being processed, the status of data transmission to the internal storage section **34,** etc., to the image capturing control section **36.** Using the information received from the start code detection section **32,** the image capturing control section **36** transmits the encoded image data stored in the internal storage section **34** to the storage section **16.**

While it is assumed herein that the digital image receiving device of FIG. **1** includes the image capturing control section **36** and the control section **22,** the control section may function also as the image capturing control section **36.** The start code SAV and the end code EAV are detected in the above description. Alternatively, where digital image data in conformity to the ITU-R601 standard, etc., is input, data H/V Sync for horizontal synchronization or vertical synchronization may be used.

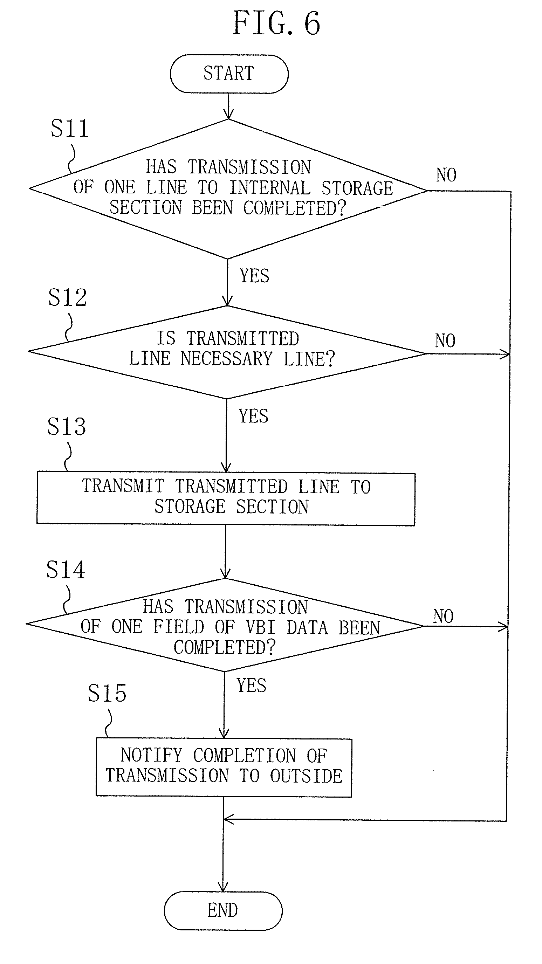

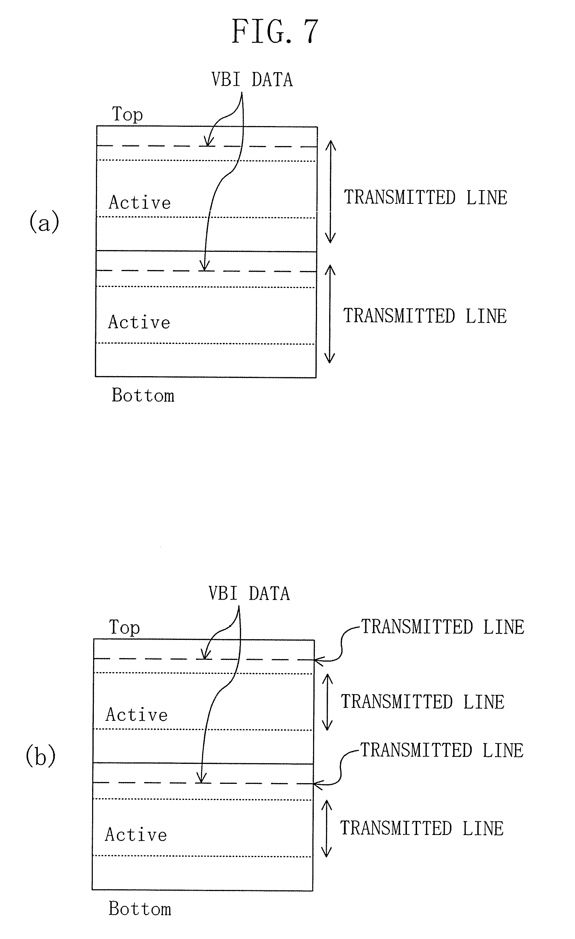

FIG. **6** is a flow chart showing a control flow of the image capturing control section **36** of FIG. **5.** FIG. **7(a)** is a conceptual diagram showing the range of data to be transmitted in a case where VBI data is transmitted together with other data. FIG. **7(b)** is a conceptual diagram showing the range of data to be transmitted in a case where VBI data is transmitted separately from other data. The image capturing control section **36** performs the following process according to an instruction from the control section **22.**

In step S11 of FIG. **6,** the image capturing control section **36** determines whether or not the transmission of one line of data from the start code detection section **32** to the internal storage section **34** has been completed. If the transmission has been completed, the control proceeds to step S12. If the transmission has not been completed, the control exits the process.

The data transmission can be done by transmitting, at once, all the lines of one field including lines on which VBI data is superimposed and active lines as shown in FIG. **7(a),** or by separately transmitting the area including the lines on which VBI data is superimposed and the area including the active lines as shown in FIG. **7(b).**

In step S12, the image capturing control section **36** determines whether or not a transmitted line is a necessary line. If the line is a necessary line, the control proceeds to step S13. If the line is not a necessary line, the control exits the process. Assume that a necessary line includes a line on which VBI data is superimposed. A necessary line may be specified from outside the digital image receiving device of FIG. **1,** or may be a predetermined line.

In step S 13, the internal storage section **34** transmits a transmitted line to the storage section **16.** All of the lines of one transmitted field may be successively stored in one area of the storage section **16,** or the area including lines on which VBI data is superimposed and the area including active lines may be separately stored in two areas of the storage section **16.**

In step S14, the image capturing control section **36** determines whether or not the transmission of VBI data of one field has been completed. If it has been completed, the control proceeds to step S 15. If it has not been completed, the control exits the process.

In step S15, the image capturing control section **36** outputs the VBI data transmission completion notification, the destination address, the parity of the transmitted field, etc., to the outside of the digital image receiving device of FIG. **1,** and exits the process. The process of FIG. **6** is performed repeatedly.

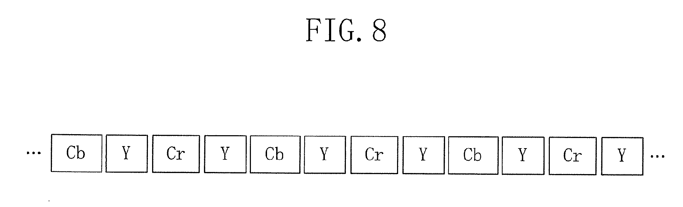

FIG. **8** is a diagram showing a data format of the ITU-R656 standard. In ITU-R656, data are transmitted in this order: Cb, Y, Cr and Y (where Y is the luminance data, and Cb and Cr are the chrominance data), as shown in FIG. **8,** wherein VBI data is actually superimposed only when the luminance data Y is transmitted. Therefore, for lines on which VBI data is superimposed, the start code detection section **32** only captures data superimposed on luminance data Y and transmits the captured data to the internal storage section **34,** and does not capture data superimposed on chrominance data Cb and Cr. Thus, it is possible to reduce the bandwidth and the size of the internal storage section **34.**

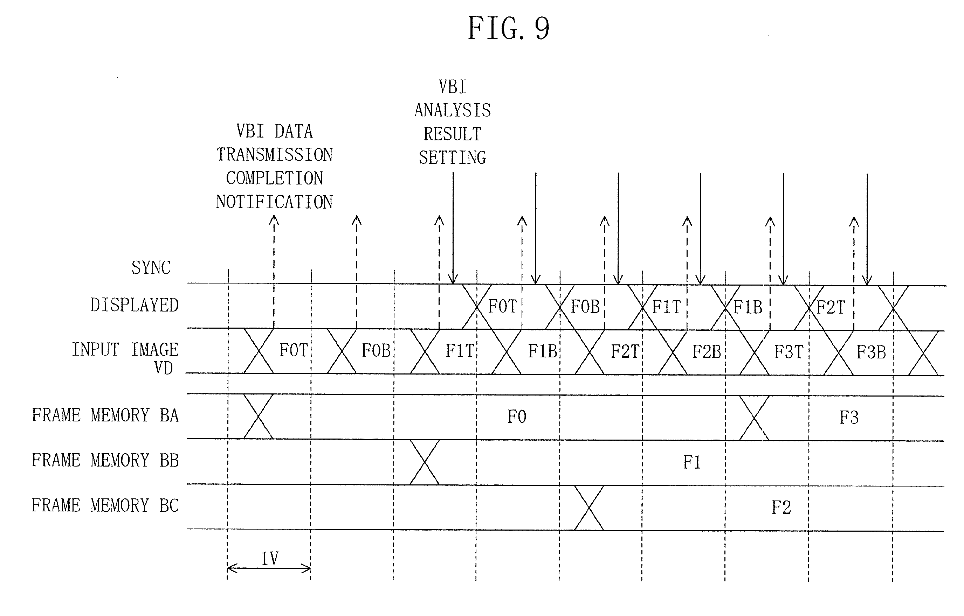

FIG. **9** is a timing diagram showing the digital image data VD input to the image capturing section **14** of FIG. **1.** FIG. **9** shows the vertical synchronization signal (Sync) of the picture for every field. The interval of these vertical synchronization signals is V.

The input images are successively stored in the frame memories BA, BB and BC of the storage section **16.** When the transmission of VBI data of the first field F0T (hereinafter, the number following "F" indicates the frame number, and the last character being T indicates the top field and it being B indicates the bottom field) of the digital image data **VD** is completed, the image capturing control section **36** outputs the VBI data transmission completion notification to the outside.

Having received the VBI data transmission completion notification, the external control device analyzes the VBI data stored in the storage section **16** to notify the control section **22** of the result as the VBI analysis result, and sets data in the control section **22.** Specifically, if the VBI analysis result indicates that the VBI data is text data, font data for OSD (On Screen Display) data, or the like, for representing text data is set in the control section **22.** If the VBI analysis result indicates that the VBI data is copy-related information, VBI data to be superimposed on image data to be output from the image output section **18** is set in the control section **22.**

The control section **22** instructs the image output section **18** to output the text data or the VBI data, which has been set according to the VBI analysis result, while it is superimposed on the image data signal. A similar operation is repeated for subsequent fields F0B, F1T, F1B, ....

The control timings, the number of frame memories and the digital image data output delay may take any of various values depending on the system.

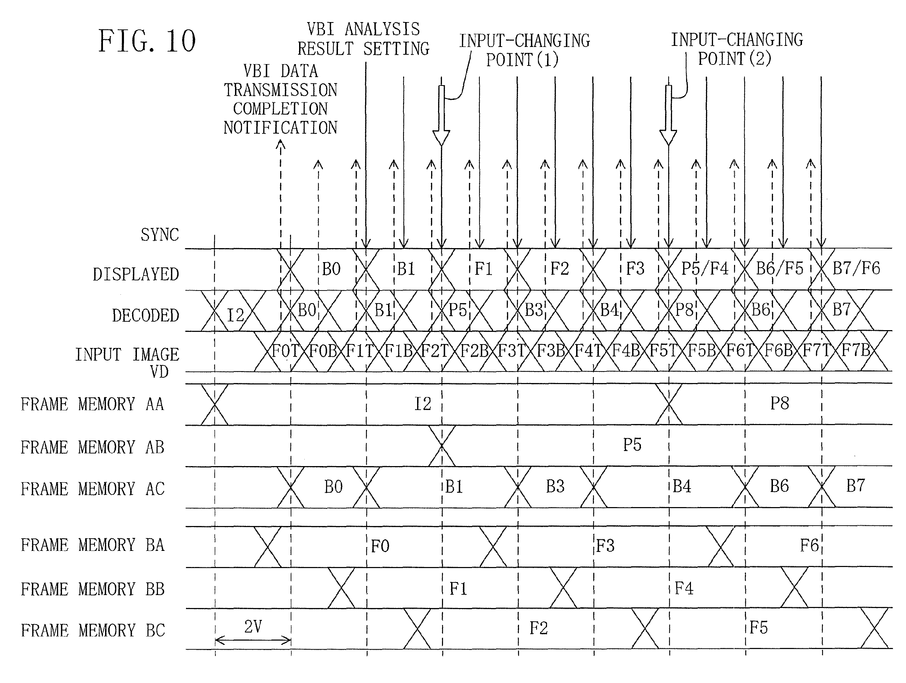

FIG. **10** is a timing diagram showing how the encoded image data **CD** is decoded and the process of capturing the digital image data **VD.** FIG. **10** shows the diagram of FIG. **3** combined with that of FIG. **9.** The image data to be actually output from the image output section **18** may be one of the following three:
(A) Only the encoded image data after being decoded,
(B) Only the captured digital image data, and
(C) The combination of (A) and (B) for dual-screen output, or the like.

As shown in FIG. **10,** the image output section **18** first outputs (A), only the encoded image data after being decoded. Thereafter, when requested by the external control device to output (B) (the input-changing point (1) in FIG. **10**), the image output section **18** outputs only the captured digital image data. Then, when requested by the external control device to output (C) (the input-changing point (2) in FIG. **10**), the image output section **18** combines (A) and (B) together to output image data for dual-screen output, or the like.

While the present embodiment is directed to a case where digital image data is captured and output while decoding encoded image data, the image decoding section **12** may be absent, wherein the device only captures and outputs digital image data.

As described above, with the digital image receiving device of FIG. **1**, it is possible to obtain VBI data contained in the digital image data **VD.** Therefore, text data, copy protection information, or the like, transmitted as VBI data can be output together with the image data to be actually displayed.

### SECOND EMBODIMENT

A second embodiment of the present invention is directed to a case where a digital image receiving device is used to capture only VBI data of the input digital image data while decoding encoded image data. Since the decoding of the encoded image data can be described as in the first embodiment, only the operation of capturing the input digital image data will be described below. In the second embodiment, a variation of the image capturing control section **36** shown in FIG. **5** will be described as the image capturing control section.

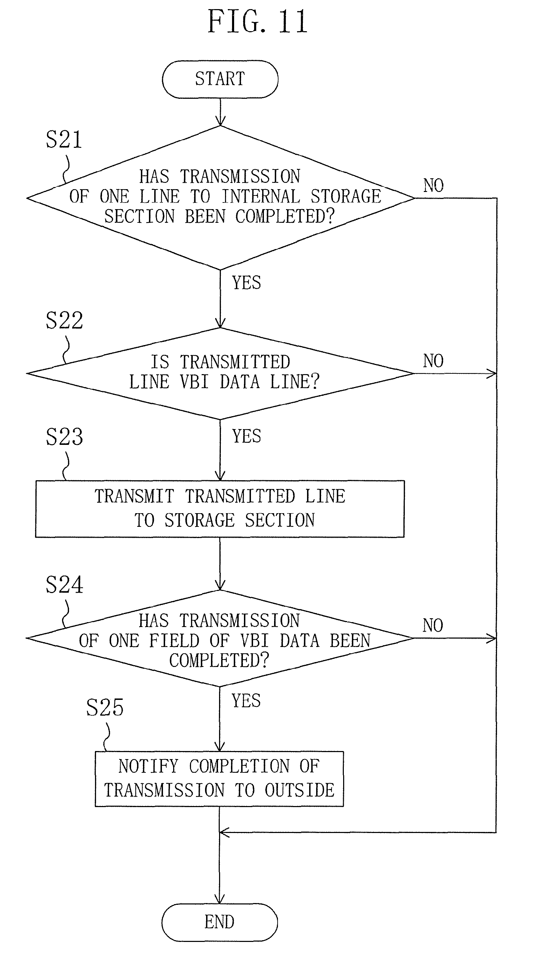

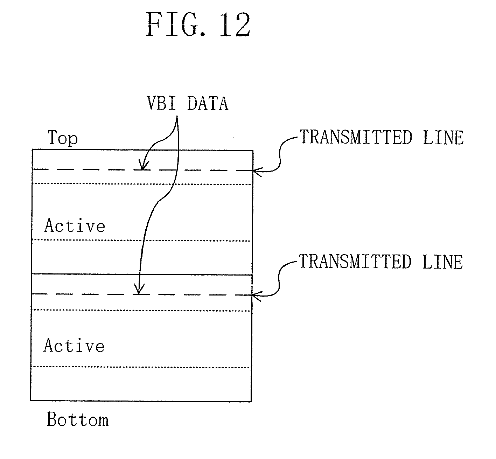

FIG. **11** is a flow chart showing a control flow of an image capturing control section according to the second embodiment. FIG. **12** is a conceptual diagram showing data to be transmitted in the second embodiment. The image capturing control section performs the following process according to an instruction from the control section **22.**

In step S21 of FIG. **11,** the image capturing control section determines whether or not the transmission of one line of data from the start code detection section **32** to the internal storage section **34** has been completed. If the transmission has been completed, the control proceeds to step S22. If the transmission has not been completed, the control exits the process. In the data transmission, as opposed to FIGs. **7(a)** and **7(b),** only the area including a line on which VBI data is superimposed is transmitted and no active line is transmitted as shown in FIG. **12.**

In step S22, the image capturing control section determines whether or not a transmitted line is a line containing VBI data. If the line is a line containing VBI data, the control proceeds to step S23. Otherwise, the control exits the process. Herein, a line specified from outside or a predetermined line is treated as a line containing VBI data.

In step S23, the internal storage section **34** transmits a transmitted line to the storage section **16.** In step S24, the image capturing control section determines whether or not the transmission of VBI data of one field has been completed. If it has been completed, the control proceeds to step S25. If it has not been completed, the control exits the process. Step S25 is similar to step S15 of FIG. 6, and thus will not be described below. The process of FIG. **11** is performed repeatedly.

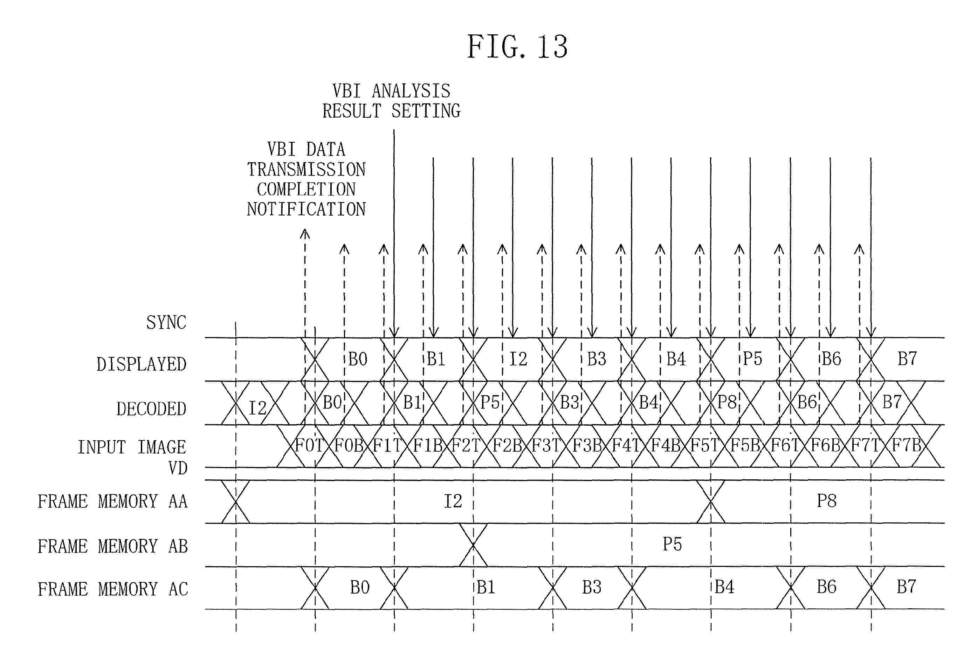

FIG. **13** is a timing diagram showing how encoded image data is decoded and the process of capturing digital image data in the second embodiment. FIG. **13** differs from FIG. **10** in that the input digital image data is not written to the frame memory of the storage section **16.** The image capturing section **14** transmits only specified lines containing VBI data to the storage section **16.** To the outside, as in the first embodiment, the VBI data transmission completion notification is output. Therefore, the external control device can analyze the VBI data using the information.

In the first and second embodiments, VBI data is set in the digital image receiving device of FIG. **1** after the external control device analyzes the VBI data. Alternatively, the VBI data analysis and subsequent processes may be performed by the external control device, without setting VBI data in the digital image receiving device of FIG. **1.**

### THIRD EMBODIMENT

A third embodiment of the present invention is directed to a case where a digital image receiving device is used to capture digital image data and analyze captured VBI data while decoding encoded image data. Herein, only the process to be performed on VBI data transmitted to the storage section **16** will be described. Other than this, the embodiment is similar to the first embodiment and will not be further described below. In the third embodiment, a variation of the image capturing control section 36 shown in FIG. 5 will be described as the image capturing control section.

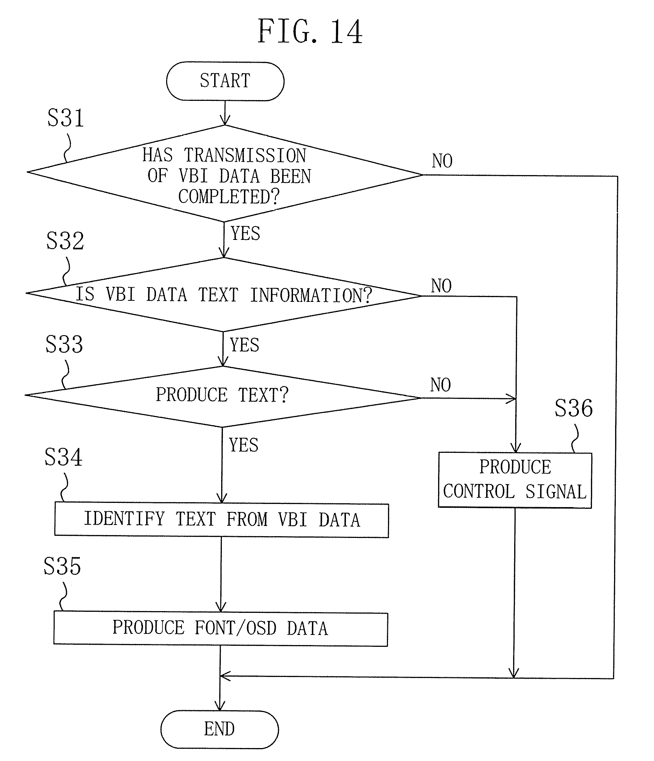

FIG. **14** is a flow chart showing a process to be performed on VBI data transmitted to the storage section **16** of FIG. **1.** In step S31, the image capturing control section determines whether or not the transmission of VBI data has been completed. If the transmission has been completed, the control proceeds to step S32. Otherwise, the control exits the process.

In step S32, the image capturing control section determines whether or not the obtained VBI data represents text information. The external control device connected to the digital image receiving device knows, on the application level, based on what the VBI data has been produced. Therefore, the image capturing control section can make the determination according to the notification from the external control device. Where the VBI data is text information, the control proceeds to step S33. Otherwise, the control proceeds to step S36.

In step S33, the image capturing control section determines whether or not to produce text. If it is determined that text should be produced, the control proceeds to step S34. Otherwise, the control proceeds to step S36. In step S34, the image capturing control section analyzes the VBI data stored in the storage section **16,** and identifies text that should be displayed.

Then, in step S35, the image capturing control section produces font data and OSD data of the identified text. Specifically, the identified text data is developed into an image representing the text, where the obtained data is the OSD data, and the control exits the process. In step S36, the image capturing control section produces a control signal in conformity to a standard such as ITU-R656 based on the VBI data stored in the storage section **16,** and the control exits the process.

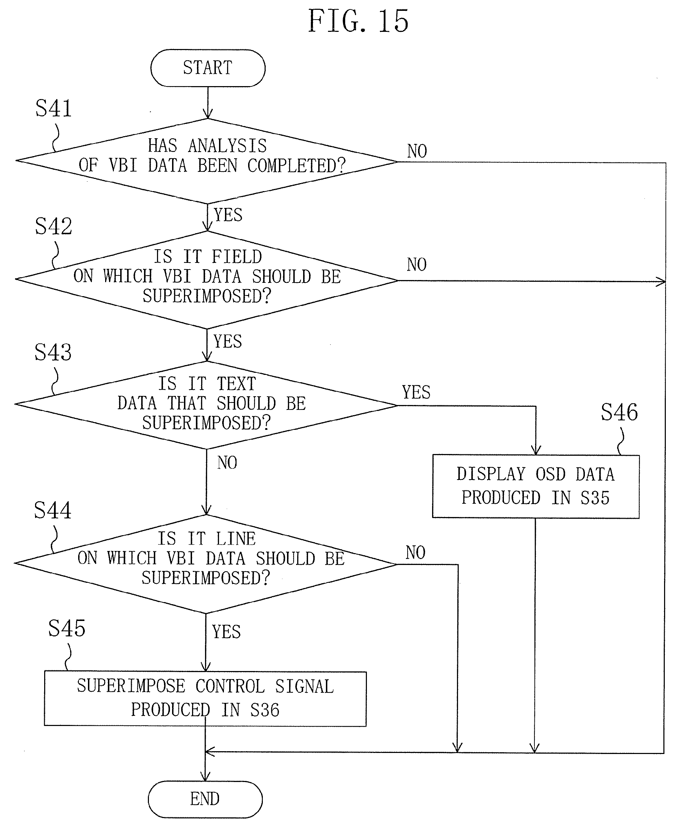

FIG. **15** is a flow chart showing a process to be performed when the result of analyzing the VBI data is superimposed on the output signal. In step S41, the image capturing control section determines whether or not the analysis of VBI data has been completed, i.e., whether or not the process of step S35 or S36 of FIG. **14** has been completed. If the analysis has been completed, the control proceeds to step S42. Otherwise, the control exits the process.

In step S42, the image capturing control section determines whether or not the field being processed is a field on which VBI data is superimposed. If so, the control proceeds to step S43. Otherwise, the control exits the process. In step S43, the image capturing control section determines whether or not data to be superimposed is text data. If it is text data, the control proceeds to step S46. Otherwise, the control proceeds step S44.

In step S44, the image capturing control section determines whether or not the line being processed is a line on which VBI data is superimposed. If it is a line on which VBI data is superimposed, the control proceeds to step S45. Otherwise, the control exits the process. In step S45, the image capturing control section stores the control signal produced in step S36 of FIG. **14** in the storage section **16** as new VBI data so that the superimposition is done in a vertical blanking interval when the image data is output from the image output section **18,** and the control exits the process. In step S46, the image capturing control section displays the OSD data produced in step S35 of FIG. **14,** i.e., stores the OSD data in the storage section 16, and the control exits the process.

The image capturing control section performs the process of FIGs. **14** and **15** according to an instruction from the control section **22.** The process of FIGs. **14** and **15** is performed repeatedly.

It is assumed herein that the process for text data and the process for control signals are performed. Alternatively, only one of the processes may be performed.

In the above embodiments, it is determined in step S14 of FIG. **6** whether or not the transmission of VBI data of one field has been completed. Alternatively, it may be determined whether or not the transmission of VBI data of two fields, for example, has been completed, or it may be determined whether or not the transmission of not only the VBI data but also the active data has been completed.

In the above embodiments, for a line on which VBI data is superimposed, only data superimposed on luminance data Y is transmitted. Alternatively, chrominance data Cb and Cr may also be transmitted.

In the above embodiments, encoded image data is encoded in MPEG format, and digital image data is in conformity to the ITU-R656 standard. However, the present invention is not limited thereto. For example, the image format may be 480p, and data in conformity to another standard such as ITU-R601 may be input as the digital image data.

The method for decoding the encoded image data described in the above embodiments with reference to FIGs. **2** and **3** is merely illustrative, and may alternatively be a different method.

### INDUSTRIAL APPLICABILITY

As described above, the present invention is useful as a digital image receiving device, or the like, since VBI data is not missed when capturing digital image data.

## Claims

1. A digital image receiving device, comprising:
an image capturing section for capturing digital image data, including image data and VBI (Vertical Blanking Interval) data, and outputting the captured data;
a storage section for storing the captured data;
an image output section for reading out data stored in the storage section and outputting the read-out data; and
a control section for controlling the image capturing section so that when the capturing process is performed, not only the image data but also the VBI data are captured and output to, and stored in, the storage section.

2. The digital image receiving device of claim 1, further comprising an image decoding section for decoding compressed encoded image data and outputting a result thereof, wherein:
the storage section further stores image data obtained by the decoding process by the image decoding section; and
the image output section reads out at least one of the decoded image data and the captured data from the storage section, and outputs the read-out data.

3. The digital image receiving device of claim 1, wherein the control section performs a control so that when the image data is output, the VBI data stored in the storage section is output while being superimposed on the image data in a vertical blanking interval.

4. The digital image receiving device of claim 1, wherein the control section performs a control so that text data obtained by analyzing the VBI data stored in the storage section is developed into an image representing the text to thereby obtain OSD (On Screen Display) data, which is stored in the storage section, and when the image data is output, the OSD data is output while being superimposed on the image data.

5. The digital image receiving device of claim 1, wherein the control section controls the image capturing section so that when capturing the VBI data, the image capturing section captures data superimposed on luminance data and does not capture data superimposed on chrominance data.

6. A digital image receiving device, comprising:
an image capturing section for capturing digital image data including image data and VBI data, and outputting the captured data;
an image decoding section for decoding compressed encoded image data and outputting a result thereof;
a storage section for storing the captured data and image data obtained by a decoding process by the image decoding section;
an image output section for reading out at least one of the decoded image data and the captured data from the storage section, and outputting the read-out data; and
a control section for controlling the image capturing section so that when performing the capturing process, the VBI data is captured and output to, and stored in, the storage section while not capturing the image data.

7. The digital image receiving device of claim 6, wherein the control section controls the image capturing section so that when capturing the VBI data, the image capturing section captures data superimposed on luminance data and does not capture data superimposed on chrominance data.

8. A digital image receiving method, comprising:
an image capturing step of capturing digital image data including image data and VBI data;
an image decoding step of decoding compressed encoded image data;
a storing step of storing data captured in the image capturing step and image data obtained by the decoding process in the image decoding step; and
an image outputting step of outputting at least one of the decoded image data and the captured data,
wherein the image capturing step is performed so that when the capturing process is performed, not only the image data but also the VBI data are captured and can be stored in the storing step.
